# EUROPEAN PATENT APPLICATION

(11) **EP 0 650 126 A1**
(43) Date of publication of application: **26.04.1995**
(21) Application number: 93830424.3
(22) Date of filing: 21.10.1993
(51) Int. Cl.: G06F 17/00

(54) **Annotation data processing system with hypermedia processable and active annotations**

(71) Applicant: BULL HN INFORMATION SYSTEMS ITALIA S.p.A., I-10014 Caluso (Torino) (IT)
(72) Inventor: Albini, Alessandro, I-26013 Crema (Cremona) (IT); Cicu, Antonio, I-20148 Milano (IT); Scamuzzo, Stefano, I-20037 Paderno Dugnano (IT); Toppeta, Donato, I-20148 Milano (IT); Popescu Janu, Michele, I-20154 Milano (IT)
(74) Representative: Falcetti, Carlo

(57) **Abstract**

Electronic system architecture for electronic document annotation by hypermedia processable and active annotations, comprising a data processing system, (4,5,6,7,8,9) having at least a user terminal (1,2,3) an operating system (16) for information managing according to a plurality of structural models, navigation means (13,14,15) for navigation from anchors in an information structure, documents in particular, editing means (11,12) activated from terminal for getting access to the documents through the navigation means (13,14,15) and annotation means (17,18,19,20) coupled to the navigation means (13), to the terminal (1,2,3) and to the operating system (16) for creating and processing annotations comprising contents, treated as a linkable node (23) of the information structure and a set of entities-relations, structured in accordance to an entity-relation model, the set being connected to the node, so that each annotation is retrievable through the navigation means (13,14,15) and is further retrievable and processable by the annotation means (17,18,19) according to relational criteria and, based on events, identified as entities of the annotation structured set, automatically starts processes such as note deletion or notification to an addressee.

## Description

The present invention relates to an architecture of electronic data processing system for modeling, linking, editing, and retrieving active and processable hypermedial annotations of a processable and active type and the related method for annotations generation and processing.

It further relates to the definition of a specific achitecture solving the implementation technicals problems of an annotation service in a local network of distributed and heterogeneous computers.

By the wording "electronic hypermedia annotations" are meant annotations (in the following also briefly designated as notes) stored and processed in digital form in computers, composed of differing media (text, diagrams, images and animations visualized on a screen and sound or voice reproducible by means connected to computerised workstations) which may be related to documents selected portions.

By processable and active annotations, annotations are meant which, in addition of being displayable, are susceptible of different kinds of treatment, specific of data processing systems, such as selection, ordering, classifying, retrieval and which, by their nature are capable of activating processes and of interacting with the electronic system where they reside and with the system users.

In this sense they may also be defined as smart.

In the state of art many examples of solution to the problem of supporting the annotation process, both on physical objects and on their electronic form, can be found.

The printed document can be easily annotated by writing or sketching thereon but this operation is constrained by the space available and allowed for writing.

The notes of this kind can not be moved and are accessible only by retrieving the annotated sheets.

This limitation gave rise to catch-eyes and removable sticky notes, known with the trademark "Post-it" of the 3M company.

They can be attached to any physical objects that is compatible with the note's glued surface.

The diffusion of computerized equipment for a more efficient, collaborative and user-location-independent processing of multimedia documents has extended the problem of supporting annotation to the electronic documents and annotation distribution.

Some editing programs or "editors" support flat written annotations and a few typographic cues such as margin and foot notes.

The Compound Document Model implemented by Microsoft in Windows environment, allows to add, by means of the protocol known as OLE (Object Linking and Embedding), references, represented by icons, pointing to simple textual, graphical or vocal notes in documents handled by heterogeneous tools.

The limits of this kind of annotations are: the lack of an internal structure, the impossibility to relate them to document portions and, moreover the lack of tools for retrieving and processing notes as self standing entities.

Some hypermedia editors support the connection (linking) and activation of multimedia notes to selectable content portions (known as "anchors") of hyper-documents but they still lack of the support of semantic models allowing the disjoint processing of the hyper-document or the ability to make these notes active.

From the quite different field of the Computer Aided Software Engineering (CASE) structured annotation tools have been proposeed,based on data models which define relations among entities, including the annotations themselves, but these tools lack in freedom versus the hypermedia approach and therefore they are not usable for annotating portions of generic unstructered documents.

The processing of the actions requested to humans by putting notes (e.g. do-that, remind, change, etc.) is still an open issue even if recently some "workflow" tools manage the flow and the editing of electronic form based messages which may be considered as structured notes.

A limitation of these notes and of the whole kinds of electronic mail is that they can be sent to addressees according to predetermined distribution rules but cannot maintain hypermedia links with documents, nor they can be used to perform other functions.

Ultimately the main limit of these tools is that they do not support the automatic processing of the notes for tasks such as retrieving notes as such or integrated by the related documents, addressing to addressees, erasing of the note, if obsolete or no more of interest to the user, and reminding at due time.

In addition these tools consider the notes as passive supports of information that only humans can understand and use, whilst in many cases the notes can be classified in types and according to specialized models for which ad hoc programs could take in charge most of the work for which those notes were conceived.

In summary what is missing is a tool supporting the annotation which on one side is open both, versus the different specialized editors used to create the information that need to be annotated and versus the system on which that information and the notes are stored, on the other which allows to process the notes and to automatize their specific functions in autonomous way.

From an architectural point of view what is missing in the state of art is the definition of a bridge between the hypermedia and the structured data-model approaches, a bridge which should allow to specify and build a set of notes in such a way that they can be easily linked and at the same time processed in a system architecture, preferably a distributed and open one.

The limitations of the prior art are overcome by the electronic annotation system which is the object of the present invention and provides this bridge, allowing for the creation of active and machine processable annotations by identifying and making explicit both the internal structure and the external relations of the annotations and therefore allowing their use by means of processable data models.

To these relations of semantic type, commonly defined simply as "relations" connections are added by 'links' to link anchors.

In the annotation system of the present invention two innovative aspects can therefore be identified: the first one is that notes, by the definition of a specific architecture, can not only be linked to etherogeneous multimedia document content portions, handled by etherogeneous tools, as in the open hypermedia environments, but can also be structured and associated to other entities according to specified data models; the second one is that thanks to the specification of an intrinsic annotation structure, preferably arranged in a hierarchy of note classes, it becomes possible to define a new taxonomy of notes having specific properties: the active notes.

The first innovative aspect is clarified by the following considerations:
the hypermedia tools allow to link and navigate these links from anchors (a selected content portion of any chunk of information) to other anchors.

Since anchors can be associated with notes it is very easy to link a note to an anchor, but this approach lacks in semantics that should allow to modelize notes and access to the annotation occurs through the anchor only.

It is not possible to have access to the note through its contents, its author, its addressee or other information related to notes.

Following a different approach the tools based on data-models where (semantic) relations are defined, allow to constrain the internal structure of any entity including the notes and the relation among entity types, including notes, but they are too restrictive for taking into account the large amount of existing unstructured information involved in the annotation services.
The annotation system of the present invention combines and makes compatible among them the two approaches and allows to freely link any note to any anchor and/or to create instances of the annotate relation among specified entity types and note types as modeled by entity-relation relational models.

As a consequence the annotation tools or means can both link (and navigate) the different types of notes from any anchor and process them using ad hoc models.

To achieve these results an architecture has been defined which uses an open hypermedia development environment, say an environment capable of providing the creation, linking and hypermedia navigation mechanisms to heterogeneous editors and programs which are integrated by means of a communication protocol among applications and hypermedia services.

An example of hypermedia open environment is "HyperPath" developped by the firm BULL SA and derived from the ESPRIT_2 project "Multicard" (described in: Rizk A., Sauter L. "Multicard: an open hypermedia system" Proceedings of the ACM Conference on Hypertext, pp. 4-10, December 1992).

Hyperpath supports, through a message based public communication protocol, named "M2000", the management of hypermedia structures such as: node ( a set of information coherent as to media and meaning), group ( a recursive set of groups and nodes), anchor ( arbitrary portion of a node) and link ( bidirectional and arbitrary connection among two or more nodes, groups or anchors which can be navigated).

In the architecture of the present invention it is further inserted an open system for the definition of data meta-models and for the management of their instances.

The open system, known as PCTE (for Portable Common Tool Environment, is described in several articles among which:
Boudier G. et al. "An overview of PCTE and PCTE+" ACM SIGSoft Software Eng. Notes, Nov.1988, pp 248-257.

PCTE is derived from the entity-relation formalism (described in Chen P.P., The Entity-Relationship Model: toward an unified view of data" ACM Transactions on Database Systems, Vol 1, No 1, March 1976.

The PCTE functionalities are defined in the public specifications issued by the European Community Commission ("PCTE: a basis for a Portable Common tool Environment, Version 1.5" Brussels, June 1989). The several producers offer compatible implementations of the system.

PCTE allows inter alia to define specific models of entities-relations-attributes (named SDS) where the offspring entities inherit relations and attributes from their ancestors; to store the SDSs and the related instances of relations and entities (named "objects"), with their attributes and arbitrary contents, in distributed form on a computer local network; to have access, through programmable interfaces (named APIs), in concurrent and transparent form, to the network of stored objects by using the same SDSs as navigation map.

The architecture according to the invention tightly integrates the Hypermedia services with the modeling and accessing ones, led by PCTE models, by defining an SDS of the hypermedia structures of Hyperpath and by using the PCTE APIs to develop an interface which provides Hyperpath too with the access and storage common services of PCTE.

This architecture allows to manage the annotation as a node of an hypermedia structure, to benefit of the properties and services thereof, but also to relate it to other entities and relations defined by some SDSs of PCTE.

In particular the hypermedia services component of the architecture is delegated to manage the hypermedia contents of the annotation and its linking to portions of documents managed by etherogeneus applications, while PCTE provides the storage common services for all the entities (including the hypermedia "node" structure used by the note) and the capability of relating notes to other entities and of modelling and processing the structured component of several types of annotations, by defining suitable SDSs of the various annotation types.

The described architecture is physically implemented by programs performed on a local network of etherogeneous computers, interfaced through the PCTE services, and of multimedia teminals through which the users may have access to the annotation services both directly, through an user interface, and from etherogeneus editors on which anchors can be created for their linking to notes.

The existance of models (SDS), which specify the note semantics in rigorous way, allows to process the annotations so as to simplify or automatize several of the operations relate thereto, still retaining easiness and flexibility of the hypermedia linking approach.

Thus it becomes possible, for instance:
- to retrieve notes by author
- to retrieve notes by addressee
- to retrieve cross-referenced notes
- to retrieve annotated documents on the basis of the notes and their attributes, by navigating from the notes to the documents,
- to sort notes by document, author, addressee, importance, chronological order etc.

The second innovative aspect is clarified by the following considerations:

The existing tools consider notes only as a way to associate small chunks of information from various authors to documents or more generally to objects.

Howether the annotations, from a conceptual standpoint, may have different purposes for the user and should allow to be processed in differing modes.

For instance a long felt need is the one to inform an addressee of the existance of a note related to a document not when the document is examined on initiative of the addressee but soliciting the addressee to watch for the note and the related document.

This functionality may be seen as the combination of annotation mechanisms and communication mechanisms, these last ones being activated by attributes of the annotation.

Other actions which may be triggered by a note may be, for instance:
- automatic notes cancellation on the occurrence of predetermined events, for instance a deadline,
- signalling the existance of a note to a user on the occurrence of a predetermined event (timed notification or reminder)
- assigning a task and related start/end dates to some addressees, controlling that the assigned task is performed and the possible automatic generation of a response note,
- circulation of voting and approval notes among several users,orderly arranging and monitoring of the approving process, processing of the voting result.

In all these cases the note performs an active role and requires the intervention of the annotation means and possibly of other tools for controlling the information transfer, even timed, the monitoring of events, the information collection, its processing and eventually the cancellation of the notes themselves.

The system of the present invention makes available such functionalities as a set of services provided by specialized notes connectable to documents portions, whose contents is implicitely involved in the meaning of these operations.

The features and the advantages of the present invention will appear more clearly from the following description of a preferred form of embodiment and from the enclosed drawings where:
- Figure 1 is a block diagram of system architecture in accordance with the present invention;
- Figure 2 shows in logical diagram a sructural model of annotation used in the architecture of fig.1 for the creation of notes;
- Figure 3 shows in logical diagram entities and structural relations additional to those of the model of Fig.1 and used to create an active type of annotation, specialized for performing control actions or like;

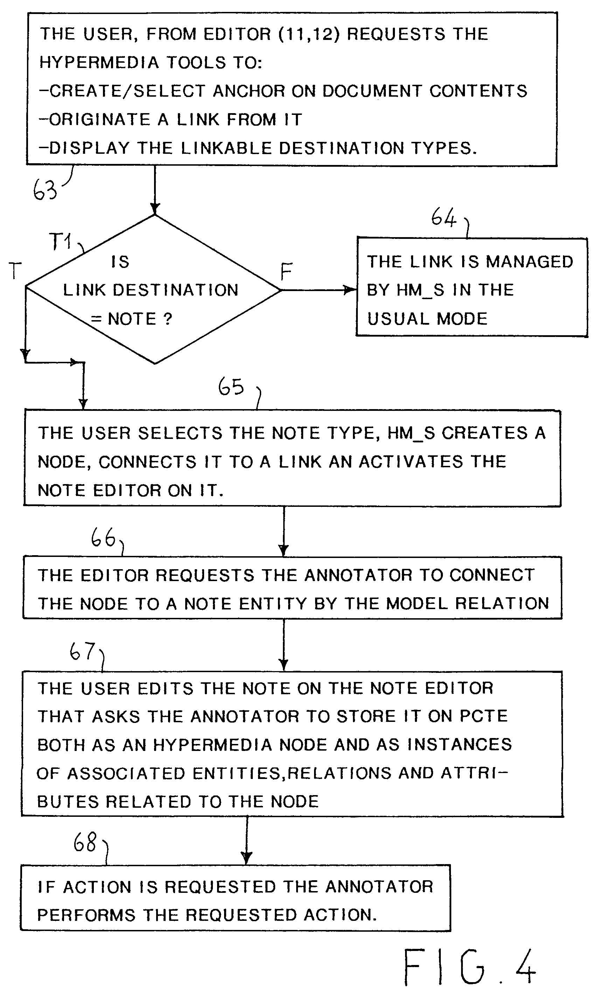

- Figure 4 shows in flow diagram the method performed by the architecture of fig.1 for the creation of a note starting from an anchor;
- Figure 5 shows in flow diagram the method performed by the architecture of fig.1 for the creation of an annotation linked to a generic object;
- Figure 6 shows in flow diagram the method performed by the architecture of fig.1 for displaying an annotation starting from the document to which it is related;
- Figure 7 shows in flow diagram the method performed by the architecture of fig.1 for displaying an annotation related to a person, author or addressee;
- Figure 8 shows in flow diagram the method performed by the architecture of fig.1 for displaying a document departing from a note related thereto;
- Figure 9 shows in flow diagram the method performed by the architecture of fig.1 to automatically notify a note to an addressee, conditionally to the occurrence of an event.

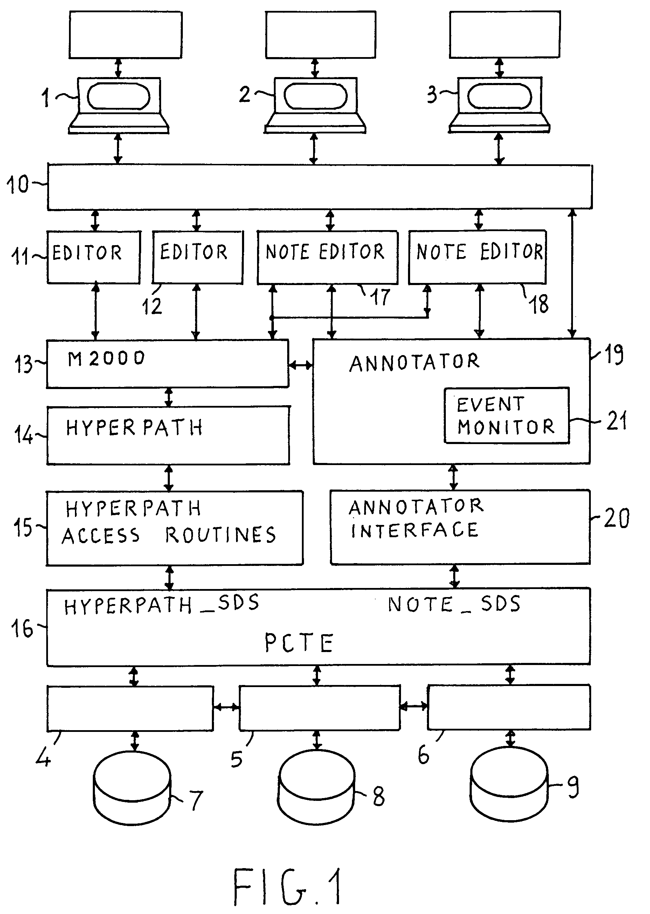

Figure 1 shows in block diagram the system architecture which is the subject of the present invention.

The system comprises hardware resources such as a plurality of user terminals 1,2,3 (preferably multimedia terminals) and a network of computers 4,5,6, locally interconnected and provided with mass storage units 7,8,9.

The system further comprises logical resources, obviously in form of hardware resident programs activated according to the needs.

The logical resources are logically organized in layers or levels, generally user transparent, and comprise a user interface 10, through which a user may invoke the activation of editing programs 11,12 (of which word processing programs are an example) or more generally working programs.

In addition to the editing programs 11,12, of known and etherogeneous type, specific note editing programs 17,18 are provided.

The editing programs 11,12 (in the following referenced by the term editors) and the note editors 17,18 exchange information and commands with a unit 14 (identified in the following as Hyperpath intended as example of hypermedia objects open manager) managing hypermedia objects and the navigation among them through a programmatic open interface 13 (which in the case of Hyperpath is named "M2000")

The hypermedia object manager 14 des not directly perform the storing and retrieval of the objects, but communicates through a new application interface 15 (Hyperpath Access Routines) with the manager 16 (PCTE) of entity-relation models, constituted by any PCTE implementation compatible with the above mentioned specifications (such as the one distributed with the name "Emeraude"), to which the function is delegated of storing, in transparent and distributed form on the storage systems 7,8,9, the hypermedia objects, managed by unit 16 as instances of entities and relations of a predetermined SDS defined on 16 and named "Hyperpath-SDS".

The set of the open interface 13, the hypermedia object manager 14 and the interface 15 towards the standard PCTE system constitute means for managing and navigating hypermedia and allows to: provide hypermedia services to etherogeneous editors; store the information, according to entity-relations standard models, on a local network of etherogeneous computers and, moreover, have access to the information created by the editors both as hypermedia objects both as referable entities in entity-relations models.

The innovative aspect of the architecture, in addition to the original mode of integrating, as previously described, conventional and known in the art components, consists in the addition of specific tools for creating and managing hypermedia notes to which access modes and programmed actions are related by the definition of active notes models.

As shown in Fig.1 the users may have access from terminal, through the user interface 10, to specific editing programs 17,18 of different types of annotations.

The hypermedia object manager 14, through the interface 13, can activate the editors 11,12 coupled to a node, connected to a link, both in order to create and display it: this capability is extended to to the note editors 17,18 which, in addition to communication with the hypermedia services manager 14, request additional services to an annotator 19, a tool for creating, managing and processing annotations which has very innovative functionalities.

The users can also use the interface 10 for having direct access to the annotation manager 19, in order to perform operations on the notes according to modes which will be described, such as, for instance, searches by author or addressee.

The annotation manager 19 is provided with processing functionalities and interaction capability with other tools: in particular it uses an event supervisor 21 (EVENT MONITOR) which manages an orderly event list, stored on 16 and provides to automatically activate the annotator 19 to perform programmed operations on annotations connected to events whose activation time (date and hours) coincide with the one of the system.

The annotator 19 communicates with the system (PCTE) 16 managing entity-relations models (and related instances), by means of a programmatic interface 20, for creating, storing and having access to the structured annotation component on the basis of corresponding semantic models (NOTE_SDS) defined on 16.

In addition the annotator 19 communicates with the interface application program 13 to perform operations on the hypermedia component of the notes.

As a consequence the editors 11,12 may use the interface 13 messages to request the hypermedia object manager 14 to create (or to navigate) an hypermedia link between an anchor, defined on document contents, and a node to which the annotator 19 has related a note, whose compilation is performed by the corresponding note editor 17,18.

It is advisable to remind that the open hypermedia environments such as Hyperpath, already define an interface protocol allowing etherogeneous editors to associate contents portions of the documents handled by them to anchors and to request the hypermedia object manager to create and navigate links towards other objects: in this context the annotations are seen as entities consisting of a "node" referable from a link, but the annotations are further provided with a specific structure and functionalities.

It is convenient to note that the existance, in the architecture, of an interface 15 between hypermedia object manager 14 and model manager PCTE 16 allows the annotator 19 to extend the node hypermedia object, seen as an entity by PCTE, with specific entity-relations models defined on PCTE 16, models to which the annotator 19 has direct access through the interface 20 to define the semantic of the various types of active annotation in a form processable by computer.

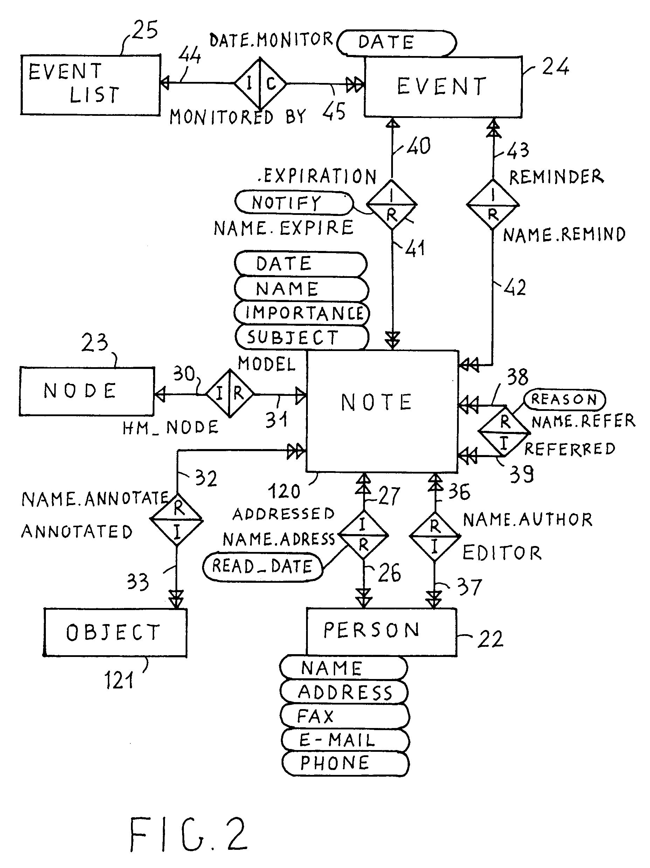

Figure 2 shows an entity-relations model, supported by PCTE (SDS), of a generic active annotation which is part of the present invention, in conformity to the descriptive conventions used in the PCTE documentation supplied by "Emeraude" (described in "The Emeraude Environment" "Appendix D, Schema and Instance Diagrams", Emeraude 1992) and summarized here in the following:
- an entity is shown as a rectangle containing the name of the entity and to which ovals are appended containing the names of the entity attributes.
- a relation is shown as a rhombus connected to the involved entities by directed lines; the arrows indicate the relation cardinality (one arrow = unary cardinality, two arrows = cardinality to many); the letters "C", "R", "I" within the two halves of the rhombus identify the relation properties and the names set them aside are the names of the relations and their key attributes in the two directions of relation "navigation": the ovals connected to the rhombuses indicate the relation attributes.

The diagram of figure 2 is a conceptual diagram of generic annotation which may be extended with other structural diagrams, differently articulated, of annotations having specialized functions, such as notes requiring the addressee to create a response note, or the integration in the note of other elements, such as a signature, its equivalent or a vote expressing a performed evaluation.

The constitutive entities of the annotation, shown as rectangles, are:
- an entity (NOTE) 120 which allows to define the atributes and the relations which integrate the hypermedia contents of an annotation so as to associate it an its own semantic; from this entity it is possible to derive daughter sub-entities which, exploiting the properties of the PCTE models, inherit attributes and relations from the NOTE entity and extend it with other attributes and relations so as to represent specialized sub-types of annotations.
- an entity (NODE) 23 which is defined in the representation and storage model of the hypermedia objects (Hyperpath_SDS).

The entity NODE represents the contents of an hypermedia node, say an object containing multimedia information and links to other hypermedia objects; this entity allows to delegate to the hypermedia manager (in the architecture of Fig.1) the storing of the unstructured annotation contents and the linking with anchors defined by the editors on documents;
- an entity (OBJECT) 121 which represents the common ancestor of all entities represented on PCTE, which entities, owing to the PCTE models properties, inherit the relations defined on OBJECT.
- an entity (PERSON) 22 which allows to define any person;
- an entity event (EVENT) 24 which allows to define any event, such as for instance a maturity date, a user access to the system or else;
- an entity event list (EVENT LIST) 25 which collects a plurality of events.

The several entities are characterised by predetermined attributes, indicated by strings enclosed in ovals.

In particular the NOTE entity is for instance characterised by:
- a date of creation DATE;
- a given name NAME;
- an importance level IMPORTANCE;
- a subject SUBJECT;
The PERSON entity is for instance characterised by:
- a person name NAME;
- a person address ADDRESS;
- a number for receiving facsimile messages FAX;
- an electronic mail sending code E_MAIL;
- a telephone number PHONE.

The EVENT entity is mainly characterised by a date and hour, specified in the attribute DATE, at which the event supervisor will activate the annotator to perform operations, specified in the note models by means of relations, on the notes connected to the event; it is clearly possible to define different activation mechanisms of the annotations for non temporal events, such as a user system access or the activation of programs.

The several entities are connected each other by the following relations, in the following described by a name pair, each of the names referring to a flow direction of the relation:
- The ADDRESS relation 26 specifies all the PERSONs, identified by the NAME key, to whom a NOTE is addressed; the inverse relation ADDRESSED 27, with implicit key, references all the NOTEs explicitely addressed to a PERSON; the READ_DATE attribute of the relation enables to store date and hour at which each of the PERSONs has consulted the first time each of the NOTEs addressed to him.
- The AUTHOR relation 36 specifies all the NOTEs entities, identified by the NAME key, which have been created or modified by a PERSON; the inverse relation EDITOR 37, with implicit key, references all the PERSONs who are co-authors of a NOTE.
- The ANNOTATE relation 32 specifies all the NOTE entities, identified by the NAME key, explicitely related to a generic OBJECT; the inverse relation ANNOTATED 33, with implicit key, references all the OBJECTs which a NOTE entity refers to; the ANNOTATE relation is very important because any entity represented in PCTE inherits this relation from the OBJECT ancestor and therefore can be annotated.
- The MODEL relation 31 (and related inverse relation HM_NODE 32) is very important too because it connects the hypermedia contents NODE of a note, stored by the hypermedia manager as a "node", to the NOTE entity, having associated thereto the relations and attributes which define its semantics.
- The EXPIRE relation 41 specifies all the NOTEs, identified by the NAME key, which must be cancelled when EVENT occurs; the inverse relation EXPIRATION 40 references the automatic cancellation EVENT of a NOTE; the NOTIFY attribute of this relation allows to specify if the annotator must request to the initial author of a note the authorisation to delete the note when the event will occur.
- The REMIND 42 relation specifies all the NOTEs, identified by the NAME key, which must be reminded when EVENT occurs; the inverse relation REMINDER 43, with implicit key, references all the EVENTs for which it is required to remind the NOTE.
- The MONITOR 45 relation ( having inverse relation MONITORED BY 44) enables the event supervisor to reference, from EVENT LIST, all the EVENTs, identified and orderly arranged by the DATE key, for requesting the annotator to perform, at the scheduled time, the suitable operations on the notes connected to an event.

The REFER 38 relation (having inverse symmetrical relation REFERRED 39) allows to connect two or more NOTEs among them; the REASON attribute of the relation allows to associate a variable name at each pair of NOTE instances, for instance in order to specify that the notes refer to the same anchor or that one of the notes is a response to the other.

The annotator implements, with suitable programs or with interfaces towards existing applications, the functionalities which results from the semantic interpretation of the conceptual active annotation model above described.

For instance the notification of a note to a new addressee or on the occurrence of a scheduled event may be performed by the direct sending of messages to the users which are connected to the system or by electronic mail, fax or telephone, by exploiting applications already available on the market and the information stored on the PERSON entity.

As already noted the PCTE specifications define the inheritance property of attributes and relations for the entities: this property allows to offspring other entities from the NOTE entity in order to model, by means of new attributes and relations, more specialized types of active notes.

For instance an annotation may be defined as action request note, if it foresee that each addressee of the same should perform, within a term, a predetermined action, for instance the reading of a document to which the note is related and should confirm the execution of the action with a reply note.

In this case it is possible to characterise the NOTE entity by formalized attributes which identify the note as action note or as a reply note and which specify the action state, the assigned term etc.

Likewise, an annotation which may be defined as check note may request, to a series of persons, not the creation of a response note but simply the signature of the received note, obviously appended in an equivalent electronic form.

In this case the semantic structure of a check note may be specified by deriving the CHECK_NOTE entity from the NOTE entity, thanks to the inheritance property.

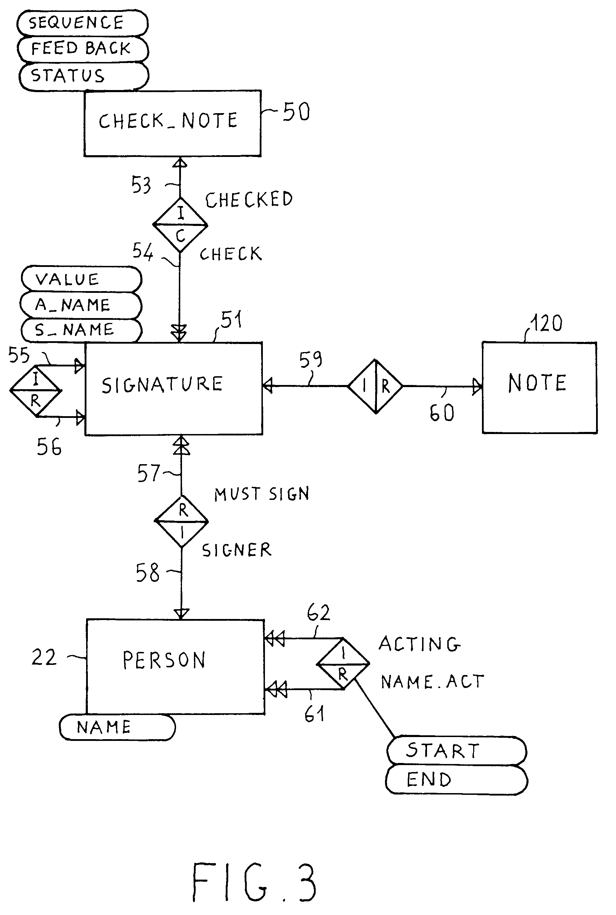

Additional attributes and relations are associated to this new entity by an SDS shown in figure 3 and hereinafter described with reference to its essential features.

The CHECK_NOTE entity 50 identifies, by means of the intermediate SIGNATURE entity 51, connected by the relation CHECKED/CHECK 53/54, the set of PERSONS 22 (connected by the relation MUST_SIGN/SIGNED 57/58) to whom the approval of the annotation contents and of the information related thereto is requested.

An user may retrieve, through the annotator, the signature requests addressed to him, by means of the relation MUST_SIGN 57 and may approve or refuse the corresponding annotation (by setting the VALUE attribute of the SIGNATURE 51 entity).

Its signature is recorded in the value of the S_NAME attribute of the SIGNATURE 51 entity, the relation 57 is deleted and a possible comment is recorded in a note (defined by an instance of the NOTE 120 entity) connected by the relation COMMENT/COMMENTED 59/60.

A PERSON 22 may define other PERSON(S) as his delegates of the signature power by means of the relation ACT/ACTING 61/62 and specify the beginning and the end of the empowering in the START, END attributes of ACT 61.

In this way the signature request may be directly notified to the right persons and the delegated person signature will be recorded in the A_NAME attribute of SIGNATURE 51.

The SEQUENCE attribute of CHECK_NOTE 50 allows to specify if the signatures must be requested in parallel or in a predetermined sequence which may be specified by a relation PRIOR/NEXT 55/56 among instances of SIGNATURE 51.

The annotator provides to update the value of the STATUS attribute of CHECK_NOTE 50 at each signature.

In case of refusal by an addressee to approve the note, the signature request process is suspended.

The FEEDBACK attribute of CHECK_NOTE 50 allows to define the control level requested by the annotation author, so that the annotator 19 provides to notify the author about the evolution of the approval process.

Clearly it is possible to extend this annotation model by adding new functionalities to it.

The annotation structure described with reference to figures 2 and 3, in the context of a system architecture as the one described with reference to figure 1, allows to obtain in easy way a plurality of functionalities which the prior art annotation tools cannot provide.

In particular it allows:
1. To directly retrieve any note of any person by the AUTHOR relation 36, departing from the author name.
2. To directly retrieve any note addressed to a person by the address inverse relation 27 (ADDRESSED) and to restrict the target with attributes, such as R_DATE, which allows to select annotations not yet read by the addressee or already read, possibily within predetermined time frames.
3. To relate a note to other notes by the reference relation REFER 38 and to retrieve so related notes with a selection limited by possible attributes.
4. To directly retrieve each annotation having a predetermined maturity (EVENT) by the relation 41.
5. To retrieve, by means of the relation 30, the node 23 and the related contents departing from the note structured portion, them from the node, by exploiting the services of the hypermedia manager to retrieve the author and from it the annoted document.
6. To directly retrieve each semantically annotated object with the relation 33.
7. To automatically notify existance of an annotation to one or more addressees by means of the available tools which may be activated immediately or at the occurrence of an EVENT.
8. To verify if a note addressed to a person has been read and when.

To these functionalities are added the functionalities offered by specialized types of annotations, such as the check one, allowing to verify it a note has been signed by who, when, in which vest and to retrieve possible appended comments and so on.

It is now possible to consider how the system architecture of figure 1 operates to provide all these functionalities to the user.

Basically as already mentioned two modes are supported for relating notes to other entities:
1) A note is connected to an anchor following the hypertextual approach of the navigation tools (Hyperpath).
2) A note is connected to any object of the environment, managed by the architecture, by means of a relation defined in a PCTE entity - relation model.

Figure 1 shows in flow diagram the creation of a note with the first method.

A user willing to annotate a document selects a portion of the document contents by means of an editor (11,12 of figure 1) and by means of the hypermedia object manager 14 (transparently integrated in the editor thanks to the interface 13) defines the selected portion as "anchor" (otherwise may also select an existing anchor).

Then he request the creation of a link to such anchor.

The hypermedia object manager 14 proposes to the user a type list of documents connectable as link destination (BLOCK 63).

If the user (Text T1) selects a document type other than a note (T1=F), then the hypermedia object manager 14 handles the link creation according to its conventional operative way (BLOCK 64), otherwise (T1=T) it creates a new hypermedia node (intended for storing the annotation hypermedia contents too), connects the node to the link and activates the note editor 17,18 corresponding to the selected type of annotation (BLOCK 65).

The operations so far described are performed according to the normal operation of the hypermedia object manager 14 and can be grouped in one command of the editors of the type "annotate the selected information".

The note editor 17,18 requests the annotator 19 to connect the hypermedia object node (represented and stored through PCTE 16 as an instance of the NODE entity 23 of figure 2) to an istance of the NOTE 120 entity (or its daughter entity corresponding to the type of selected annotation) by means of the MODEL 31 relation, as defined by the generic entity_relation annotation model SDS previously described (BLOCK 66).

The user interacts with the note editor 17,18, compiles the note and provides all the information required to specify the related structure, for example to address the note to some persons or to set the date at which the note must the automatically reminded ot deleted.

The note editor communicates with the annotator 19 which stores all the information set as hypermedia contents of the node object (by using the hypermedia manager 14 services) and as instances of entities and relations with the related attributes according to the suitable annotation model (SDS) (BLOCK 67): for instance the person who creates the note is automatically recorded by the annotator which creates an instance of the relation AUTHOR 36 between the PERSON 22 instance which identifies the annotation author and the current NOTE 120 instance.

In similar way the request to remind the annotation is translated by the annotator in the creation of an instance of the EVENT 24 entity, whose activation is scheduled for the requested date (recorded by its DATE attribute), in the creation of an instance of REMIND 42 relation from EVENT 24 to NOTE 120, specifying the requested notify operation and in the creation of an instance of the MONITOR 45 relation, from EVENT-LIST 25 to EVENT 24, allowing the event supervisor to manage the activities required by the event occurrence.

The annotator, based on information provided by the author and on the annotation type provides to perform other actions by activating, if required, suitable tools.

For instance it provides to notify the annotation to explicitely addressed persons (identified by an instance of the ADDRESS 26 relation from NOTE 120 to each PERSON 22) or to persons invited to perform an action or to approve the contents of the note itself (BLOCK 68).

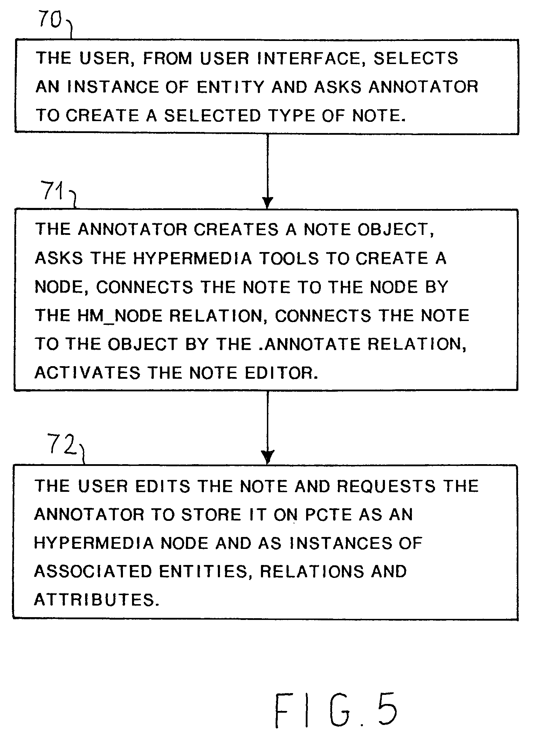

The described architecture allows to create a note, connected by a relation to any entity defined on PCTE, with the following operation sequence shown in figure 5 (second method).

The user, through the user interface 10, selects an instance of an entity, which may be an OBJECT 121 or sub-type thereof (for instance a NODE 23, a NOTE 120 or a PERSON 22) and requests the annotator 19 to create a specific note type related to the selected instance (BLOCK 70).

The annotator 19 requests the hypermedia structure manager 14 to create a new NODE 23 (to store the note hypermedia contents) having associated therewith a selected note editor 17,18, which is activated.

The annotator 19 further connects NOTE 120 to the OBJECT 121, through an instance of the ANNOTATE 32 relation, and to the NODE 23 instance, through the HM_NODE 30 relation (BLOCK 71).

The user, through the note editor, compiles the annotation, as already described in the case of anchor related note creation, to which description reference is made (BLOCK 72).

Once the annotation has been created, access to the annotation can be made in several ways, the more relevant ones being described in the following:

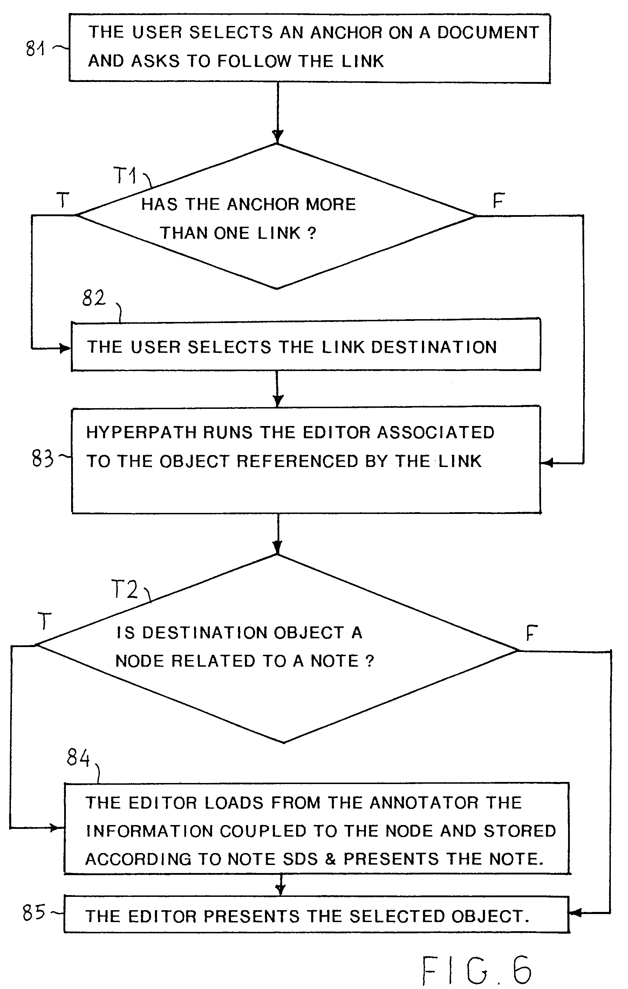

According to a first mode, shown in figure 6, a user, looking at a document, finds the presence of anchors and decides to navigate the related hypermedia link: the document editor 11,12 transfer the user request, through interface 13, to the hypermedia object manager 14 (BLOCK 81).

If the hypermedia object manages 14 identifies the existance of more links connected to the anchor (test T1=T), then asks the user to select one of them by indicating the name of the destination object (node, anchor or group) and of the related editor (BLOCK 82).

The hypermedia object manager 14 activates, through interface 13, the editor related to the selected object (BLOCK 83). These operations are performed in conventional way.

If the link destination is a node storing the hypermedia contents of a note (Test T2=T), then the related note editor 17,18 requests the annotator 19, through interface 20, to provide the whole information set related to NODE 23, which set is stored on PCTE 16 in accordance to the entity-relation model of the specific annotation type.

In this way the note editor 17,18 can display it (BLOCK 84).

If the link destination is a node storing a generic hypermedia contents, not related to a note, the editor displays the selected object (BLOCK 85).

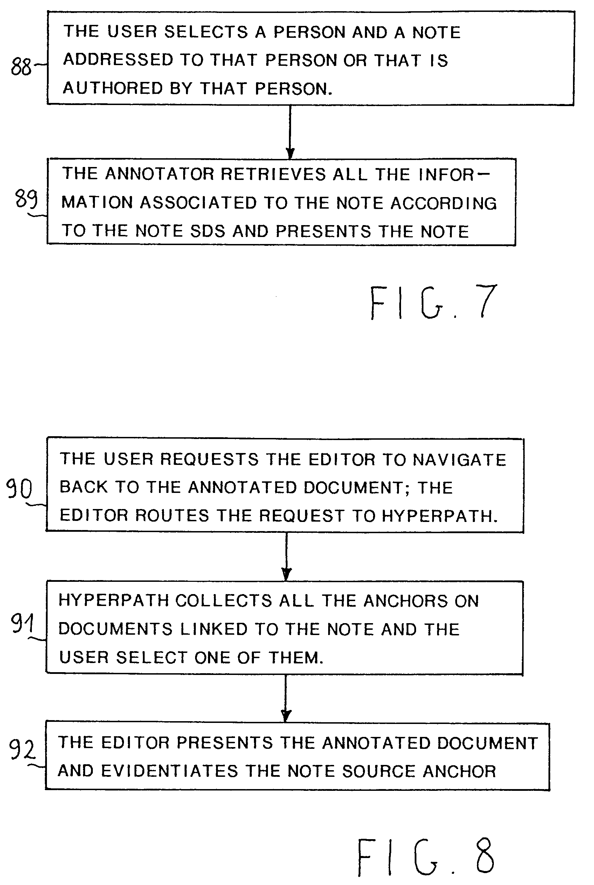

Access to an annotation may also be performed by using the relations towards the NOTE 120 entity, as defined in the note model: for example the request to display a note addressed to a person may be considered or a note authored by a known person, according to the model described here in the following with reference to figure 7.

In this case the user, through the user interface 10, has access to the annotator 19 services for selecting a PERSON 22 instance and requesting to display, through the ADDRESS 36 relation from PERSON 22 to NOTE 120, the list of annotations addressed to that person or, through the AUTHOR 36 relation from PERSON 22 to NOTE 120, the list of annotations co-authored by that person (BLOCK 88).

Then the user selects one of them.

The annotations may be arranged in the list depending on the value of the NOTE 120 attributes, such as IMPORTANCE, and on the value of the ADDRESS 36 relation attributes, such as the date at which the selected person has read the annotation the first time (READ_DATE).

The annotator 19, as previously described, searches on PCTE 16, through interface 20, all the information set related to the annotation identified by NOTE 120 based on the entity-relation model of the specific annotation type and activates the suitable note editor 17,18 in order to present it (BLOCK 89).

In similar way the user may for instance select the notes which request a person to perform a task or to approve the note and annotated object contents.

A property of essence of the actives notes is the possibility to have access to documents related thereto by hypermedia links even when the note has been retrieved through relations defined in an entity-relation model: this operation is described in the following with reference to figure 8.

The user requests the note editor 17,18 to display one of the annotated docunents, which transfers to the hypermedia object manager 14, through the interface 13, the request to navigate in reverse direction, one of the links whose destination is the node having the hypermedia note contents identified by the NODE 23 instance connected to NOTE 120 by the relation HM_NODE 30 (Block 90).

The hypermedia object manager 14 identifies all the documents where anchors are present, the links connected to the node corresponding to the note and, in case they are more than one, it requests the user which one has to be displayed.

Then it provides to activate, through the interface 13, the corresponding editor 11,12 on the selected document (Block 91).

The editor 11,12 presents the annotated document and sets on the anchor, according to the conventional navigation mechanism of the hypermedia environments (Block 92).

Another basic feature of the active annotations is the event supervisor 21 capability to perform operations on the annotations as a function of the relations defined among the EVENT entity 24 and the several kinds of notes or other entities related to EVENT through a relational model.

For example the notification process of a note to addressed persons may be considered, the notification aiming to remind the note existance at a date and hour scheduled by the author.

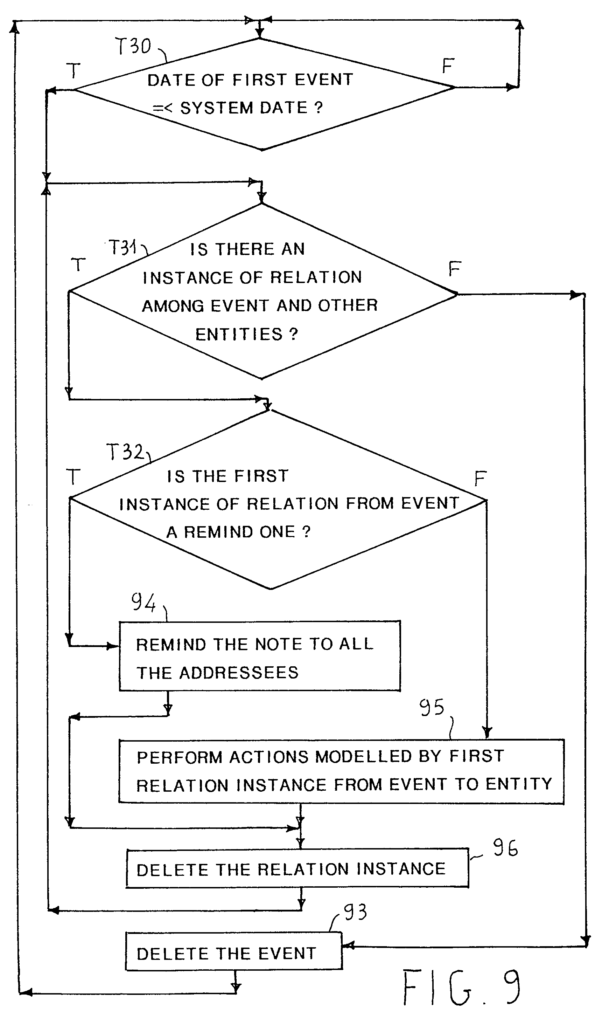

The process is described with reference to figure 9.

The event supervisor 21 uses the MONITOR 45 relation which from EVENT_LIST 25 references all the EVENT 24 instances, arranged by scheduled activation date and hour (recorded in the DATE attribute) to establish, based on the system clock, if there is a scheduled event to be processed (Test T30).

When a scheduled EVENT is in condition to be activated, then the event supervisor 21 checks if there is at least a relation instance from EVENT 24 to other entities (Test T31).

In the negative case (T31=F) the EVENT 24 instance is deleted (BLOCK 93). In the affirmative (T31=T) the following operations are performed. Then in both cases the event supervisor recycles and tests if the next event has to be activated (Test T30).

The event supervisor 21, after having checked the existance of a relation (T31=T), checks (Text T32) if the first relation instance is of REMIND 43 type pointing to a NOTE 120 instance.

In the affirmative (T32=T) reminds the annotation to the addressed persons, specified by the ADDRESS 26 relation from NOTE 120 to PERSON 22, by sending them a notification message containing a reference to the note to be reminded (BLOCK 94).

In the negative other operations are performed specific to the relation kind of the detected instance (BLOCK 95).

In both cases the processed relation instance is deleted (BLOCK 96) and the event supervisor steps back to check if there are other relation instances connected to the event (Test T31).

An event could be activated by other mechanisms: for instance the definition of a relation between PERSON 22 and EVENT 24, should allow a person to anticipate the event activation.

By the same token an event may be connected to specialized types of annotations with relations defining specific operations, such as for instance the activation of voting operations on the annoted document and the voting results processing at their conclusion.

The notification mechanism can be performed in several ways: for instance a MESSAGE entity may be defined and related to PERSON 22, to NOTE 120 and to a MESSAGE_LIST entity.

In this way a queue of person addressed messages can be created and managed by a controller coupled to each of the terminals 1,2,3 displaying the messages addressed to each user on his terminal and allowing the user to get access from the message to the related NOTE 120 annotation.

Another controller, common to the system, can manage messages addressed to persons who are not connected to the computer local network in order to distribute the message by means of other communication services (such as for instance electronic mail or facsimile) and to attach thereto the information contained in the notes and their references (consistently with the available transmission means).

After this long description it becomes a matter of common expertise to define the processes which the architecture and the annotator in particular must perform for managing specialized types of annotations such as check notes and evaluation notes.

It is further clear that several changes can be made to the described flow diagrams and to the order in which certain phases are performed.

## Claims

1. Electronic system architecture for annotating documents and objects with processable and active notes comprising:
- a data processing system (4,5,6,7,8,9) having at least a user terminal (1,2,3), for information storing retrieving and processing;
- management tools (16) of said information according to a plurality of structural models,
- hypermedia object management and navigation means (13,14,15) for navigating among said objects through anchors and links,
- editing means (11,12) activated from said user terminal for having access to said hypermedia objects through said management and navigation means (13,14,15) and said user terminal (1,2,3)
characterised in that said system architecture comprises:
- annotation means (17,18,19,20) coupled to said management and navigation means (13), to said management tools (16) and to said user terminal (1,2,3) for generating and processing of notes, said notes comprising an hypermedia contents (23) treated as a linkable node of an hypermedia object structure and a set of entities (120,121,22,24,25) attributes and relations (26,27,30,31,32,33...) structured according one at least of said models, said set being managed by said management tools (16) whereby said notes are accessible both through said management and navigation means (13,14,15) and, by criteria defined by entity-relation models, through said annotation means (17,18,19,20).

2. System architecture as in claim 1 where said annotation means (17,18,19,20) comprise means (32,33) for relating, to one of said notes, at least an event (24) as an entity of said structured set, said event (24) causing, at its occurrence, an automatic processing of said note, such as the displaying, notification of said note to an addressee or the delection of said note.

3. System architecture as in claim 1 where said annotation means (17,18,19,20) comprises means (36,37,67) for relating to one of said notes at least a person (22) as an entity of said structured set, said person (22) being identified by a relation (36) as author of said one note, whereby said one note can be retrieved through said annotation means (17,18,19) and said relation (36).

4. System architecture as in claim 1 where said annotation means (17,18,19) comprises means (26,27,67) for relating to one of said notes at least a person (22), as an entity of said structured set, said person being identified by a relation (26) as addressee of said one note, whereby said one note can be retrieved through said annotation means (17,18,19) and said relation (26).

5. Method for the creation and the processing of electronic processable and active annotations in a data processing system to which a user has access for objects creation and processing comprising the following steps;
a) selection of an object to be annotated (13,65,70)
b) creation (65,71) of an hypermedia node for storing hypermedia annotation contents, said node being connected to said object (70) by a navigable link,
c) connection (66,71) of said node to an entity-relation structure specified by entities, relations and attributes,
d) editing of said node with annotation contents (72,62) and specification of said structure connected thereto.

6. Method as in claim 5 comprising the following step of:
- selecting an annotation anchor (81),
- retrieving (81,T1,82) at least an annotation linked to said anchor,
- displaying (T2,84,85) said retrieved annotation.

7. Method as in claim 5 comprising the following step of:
- selecting (88) an entity of said entity-relation structure,
- retrieving (89) at least an annotation relationally connected to said entity,
- displaying (89) said annotation.

8. Method as in claim 5, comprising the following steps of:
- navigating backword (90) from an entity of said entity-relation structure of annotation,
- retrieving (91) at least a document annotated by said annotation,
- displaying (92) said retrieved document.

9. Method as in claim 5 comprising the following steps:
- identification (T30,T31) by said system of the occurrence of an event relationally connected to an entity of said entity-relation structure of annotation;
- identification (T32) of the relation type;
- execution (94,95) of the action requested by said identified relation type;
- deletion of said relation (96).
